# FASCICULE DE BREVET EUROPEEN

(11) **EP 4 140 044 B1**
(45) Date de publication et mention de la délivrance du brevet: **20.08.2025**
(21) Numéro de dépôt: 21725571.0
(22) Date de dépôt: 15.04.2021
(51) Int. Cl.: H04B 1/403, G06K 7/10, G06K 17/00, G06K 19/07

(54) **PROCÉDÉ, SYSTÈME DE DÉTECTION DE RÉCEPTEURS, ET RÉCEPTEUR RÉGLABLE**
VERFAHREN UND SYSTEM ZUR ERKENNUNG VON EMPFÄNGERN UND EINSTELLBARER EMPFÄNGER
METHOD AND SYSTEM FOR DETECTING RECEIVERS, AND ADJUSTABLE RECEIVER

(30) Priorité: 24.04.2020 FR 2004125
(43) Date de publication de la demande: 01.03.2023
(73) Titulaire: Greenerwave, 06560 Valbonne (FR); Centre National de la Recherche Scientifique (CNRS), 75016 Paris (FR); Ecole Supérieure de Physique et de Chimie Industrielles de la Ville de Paris, 75005 Paris (FR)
(72) Inventeur: LEROSEY, Geoffroy, 75010 PARIS (FR)
(74) Mandataire: Plasseraud IP
(86) Numéro de dépôt international: PCT/FR2021/050665
(87) Numéro de publication internationale: WO 2021/214403

(56) Documents cités:
- US-A1- 2005 190 098
- US-A1- 2013 265 140

## Description

### DOMAINE TECHNIQUE

La présente invention est relative à un procédé et à un système de détection de récepteurs permettant de mettre en œuvre le procédé, ainsi qu'à un récepteur réglable.

### ETAT DE LA TECHNIQUE ANTERIEURE

Des articles à l'achat peuvent être munis d'étiquettes ou badges équipés de technologie RFID afin, par exemple, de diminuer le temps de passage en caisse. Les articles sont placés dans un bac devant ou sur le côté de la caisse, le système identifie les articles grâce aux étiquettes RFID et établit la facture automatiquement, sans que la caissière ait besoin de scanner chaque article individuellement. Un gain de temps est donc obtenu.

Cependant, il se peut que certains articles ne soient pas détectés par le système, ce qui peut conduire à des erreurs de caisse.

Quand de multiples récepteurs (ou badges) sont placés les uns à côté des autres, comme dans le cas d'un bac de caisse enregistreuse, leur lecture peut s'avérer difficile, notamment à cause d'interférences et/ou de minimas de champ électromagnétiques. Ces interférences sont dues à la fois à l'environnement qui peut diffuser, réfléchir, diffracter les ondes, mais également aux récepteurs eux-mêmes qui, parce qu'ils sont des diffuseurs également, réfléchissent, diffusent, diffractent, voire atténuent les ondes.

Il peut aussi y avoir des problèmes avec la détection de récepteurs lorsque ceux-ci envoient des réponses simultanées.

Le document US2013/265140A1 fourni un exemple de communication par radiofréquence à faible puissance. Le document US2005/190098A1 fourni un exemple de système et procédé de localisation d'objets utilisant la RFID.

### EXPOSE DE LA DIVULGATION

La présente divulgation a pour but d'améliorer la détection de badges dans le volume.

À cet effet, il est fourni un procédé de détection de récepteurs mis en œuvre par un système de détection comprenant une antenne globale adaptée à émettre une onde primaire, et un contrôleur global relié à l'antenne globale, le système comprenant un récepteur réglable ayant une antenne de récepteur adaptée pour recevoir l'onde primaire et émettre une onde secondaire, le récepteur réglable ayant un contrôleur de récepteur relié à l'antenne de récepteur, le contrôleur de récepteur étant adapté à détecter l'onde primaire reçue par l'antenne de récepteur et à commander l'émission de l'onde secondaire par l'antenne de récepteur, le récepteur réglable ayant une impédance modifiable ainsi influant sur l'onde secondaire émise, le récepteur réglable étant initialement dans un mode de détection où le récepteur réglable a une impédance de base, le procédé comprenant :
- une étape de détection du récepteur dans laquelle le récepteur réglable est détecté par le contrôleur global lorsque l'antenne globale reçoit l'onde secondaire émise par le récepteur réglable, suivie d'
- une étape de reconfiguration dans laquelle le contrôleur global commande le contrôleur de récepteur de passer à un mode de coopération où l'impédance du récepteur réglable est alternée entre une première impédance de configuration et une deuxième impédance de configuration afin de détecter d'autres récepteurs, l'étape de reconfiguration étant d'une durée d'ordre de magnitude supérieur par rapport à une durée de chaque alternance des première et deuxième impédances de configuration.

Grâce aux dispositions ci-dessus, le nombre de récepteurs réglables mis à disposition du contrôleur global pour la détection de nouveaux récepteurs augmente au fur et à mesure de leurs détections. Chaque fois qu'un récepteur est détecté, son impédance est réglée par le contrôleur global vers un mode adapté pour la détection d'autres récepteurs. Le système est alors capable de détecter de manière plus efficace la présence d'un ou de plusieurs récepteurs jusque-là non détectés, quelle que soit la position desdits récepteurs, que ceux-ci soient fixes ou mobiles.

Dans divers modes de réalisation du système, on peut éventuellement avoir recours en outre à l'une et/ou à l'autre des dispositions suivantes :
- l'impédance de base est imposée par le contrôleur de récepteur indépendamment du contrôleur global.
- la première impédance de configuration est l'impédance de base.
- la première impédance de configuration est éloignée de la deuxième impédance de configuration.
- la première impédance de configuration et la deuxième impédance de configuration sont proches et de part et d'autre de l'impédance de base dans le plan complexe.
- le récepteur réglable est un premier récepteur réglable, l'antenne de récepteur est une antenne de premier récepteur, l'onde primaire est une première onde primaire, l'onde secondaire est une première onde secondaire, le contrôleur de récepteur est un contrôleur de premier récepteur, l'impédance de base est une première impédance de base, l'impédance de configuration est une première impédance de configuration, et le système contient un deuxième récepteur réglable, le deuxième récepteur réglable ayant une antenne de deuxième récepteur adaptée pour recevoir l'onde primaire et émettre une deuxième onde secondaire et un contrôleur de deuxième récepteur relié à l'antenne de deuxième récepteur, le contrôleur de deuxième récepteur étant adapté pour commander l'émission de la deuxième onde secondaire par l'antenne de deuxième récepteur et pour détecter l'onde primaire reçue par l'antenne de deuxième récepteur, le deuxième récepteur réglable ayant une impédance modifiable ainsi influant sur la deuxième onde secondaire émise par l'antenne de deuxième récepteur, le deuxième récepteur réglable étant initialement dans le mode de détection où le deuxième récepteur réglable a une deuxième impédance de base,
   le procédé comprenant de plus une étape de reconfiguration du deuxième récepteur dans laquelle lorsque l'antenne globale reçoit la deuxième onde secondaire émise par le deuxième récepteur réglable et que le contrôleur détecte le deuxième récepteur réglable, le contrôleur global commande le deuxième récepteur réglable de passer en mode de coopération dans lequel l'impédance du deuxième récepteur réglable alterne entre une première impédance de configuration du deuxième récepteur et une deuxième impédance de configuration du deuxième récepteur afin de détecter d'autres récepteurs, l'étape de reconfiguration du deuxième récepteur réglable étant d'une durée d'ordre de magnitude supérieur par rapport à la durée de chaque alternance des première et deuxième impédances de configuration du deuxième récepteur.
- la première impédance de configuration du deuxième récepteur est la deuxième impédance de base du deuxième récepteur.
- la première impédance de configuration du deuxième récepteur est éloignée de la deuxième impédance de configuration du deuxième récepteur.
- la première impédance de configuration du deuxième récepteur et la deuxième impédance de configuration du deuxième récepteur sont proches et de part et d'autre de l'impédance de base dans le plan complexe.
- les alternances des impédances de configuration du deuxième récepteur dans le mode de coopération sont déterminées par un algorithme d'optimisation, ou par une série prédéfinie de valeurs d'impédances.
- les alternances des impédances de configuration du deuxième récepteur dans le mode de coopération sont effectuées à des instants temporels non périodiques irréguliers.
- le contrôleur global détermine les alternances des impédances de configuration du deuxième récepteur dans le mode de coopération.
- le contrôleur global commande le passage en mode de coopération des récepteurs identifiés, et les contrôleurs de ces récepteurs réglables identifiés déterminent les alternances des impédances de configuration lorsqu'ils sont en mode de coopération.
- dans le mode de coopération, l'impédance du récepteur réglable alterne entre une pluralité d'impédances de configuration.
- le récepteur réglable inclut une pluralité de composants réglables et d'antennes associées, et dans lequel : le contrôleur global commande l'émission par l'antenne globale d'une onde de contrôle globale contenant une information d'identification avec un paramètre de réglage associé pour désigner chaque composant réglable à qui est destiné ledit paramètre de réglage, et ledit composant réglable pilote l'impédance de l'antenne associée par rapport au paramètre de réglage si l'information d'identification est égale à son identifiant de composant réglable.
- le système comprend de plus un élément réglable relié à l'antenne globale, et dans l'étape de détection du récepteur le contrôleur global modifie de plus l'impédance d'élément réglable.
- le contrôleur global modifie simultanément l'impédance de l'élément réglable et l'impédance du récepteur réglable identifié selon des valeurs déterminées par un algorithme d'optimisation.

Il est aussi fourni un système de détection de récepteurs comprenant :
- un récepteur réglable,
- une antenne globale adaptée pour émettre une onde primaire, et pour recevoir une onde secondaire émise par le récepteur réglable en réponse de la réception de l'onde primaire,
- un contrôleur global relié à l'antenne globale, le contrôleur global étant adapté pour commander l'émission de l'onde primaire et pour détecter le récepteur réglable par l'intermédiaire de l'onde secondaire reçue par l'antenne globale,

caractérisé en ce que le récepteur réglable comprend en outre :
   - une antenne de récepteur adaptée pour émettre l'onde secondaire ;
   - un contrôleur de récepteur relié à l'antenne de récepteur, le contrôleur de récepteur étant adapté à commander l'émission de l'onde secondaire par l'antenne de récepteur et à détecter l'onde primaire reçue par l'antenne de récepteur,
le récepteur réglable ayant une impédance modifiable afin de modifier la manière dont l'onde primaire est réfléchie et/ou transmise par l'antenne de récepteur en onde secondaire,
le système étant configuré tel que lorsque le récepteur réglable est détecté par le contrôleur global, le contrôleur global commande le contrôleur de récepteur de passer d'un mode de détection à un mode de coopération,
   - dans le mode de détection, le récepteur réglable a une impédance de base,
   - dans le mode de coopération, l'impédance du récepteur réglable est alternée entre une première impédance de configuration et une deuxième impédance de configuration afin de détecter d'autres récepteurs, le mode de coopération étant d'une durée d'ordre de magnitude supérieur par rapport à une durée de chaque alternance des première et deuxième impédances de configuration.

Dans divers modes de réalisation du système, on peut éventuellement avoir recours en outre à l'une et/ou à l'autre des dispositions suivantes :
- la première impédance de configuration est l'impédance de base.
- la première impédance de configuration est éloignée de la deuxième impédance de configuration.
- les alternances des impédances de configuration dans le mode de coopération sont déterminées par un algorithme d'optimisation, ou par une série prédéfinie de valeurs d'impédances.

- les alternances des impédances de configuration dans le mode de coopération sont effectuées à des instants temporels non périodiques irréguliers.
- le contrôleur global est adapté à commander les alternances des impédances de configuration dans le mode de coopération du récepteur réglable.
- le contrôleur global est adapté à commander le passage en mode de coopération des récepteurs réglables identifiés, et le contrôleur du récepteur réglable identifié est adapté à commander les alternances de l'impédance de configuration lorsqu'il est en mode de coopération.

Il est aussi fourni un récepteur réglable comprenant :
- une antenne adaptée pour émettre une onde secondaire en réponse de la réception d'une onde primaire et pour recevoir une onde de contrôle globale; et
- un contrôleur relié à l'antenne, le contrôleur étant adapté pour commander l'émission de l'onde secondaire et pour détecter l'onde primaire reçue et l'onde de contrôle globale,
le récepteur réglable ayant une impédance modifiable ainsi influant sur l'onde secondaire émise,
le récepteur réglable ayant un mode de détection et un mode de coopération, le récepteur réglable passant du mode de détection au mode de coopération en fonction de l'onde de contrôle globale reçue,
- dans le mode de détection, le récepteur réglable a une impédance de base, et
- dans le mode de coopération, l'impédance du récepteur réglable est adaptée à être alternée entre une première impédance de configuration et une deuxième impédance de configuration afin de détecter d'autres récepteurs, le mode de coopération étant d'une durée d'ordre de magnitude supérieur par rapport à une durée de chaque alternance des première et deuxième impédances de configuration.

### BREVE DESCRIPTION DES DESSINS

D'autres caractéristiques et avantages de la présente divulgation apparaîtront au cours de la description suivante d'un de ses modes de réalisation, donné à titre d'exemple non limitatif, en regard des dessins joints.

Sur les dessins :
- la figure 1 est un schéma général d'un mode de réalisation d'un système de détection de récepteurs ;
- la figure 2 illustre un exemple de récepteur réglable pour le système de la figure 1 ;
- la figure 3 illustre une alternance temporelle d'impédance pour un récepteur réglable de la figure 2 ; et
- la figure 4 illustre une liste dynamique utilisée par un algorithme pouvant être utilisé par le système de la figure 1.

Sur les différentes figures, les mêmes références numériques désignent des éléments identiques ou similaires.

### DESCRIPTION DETAILLEE

### SYSTÈME

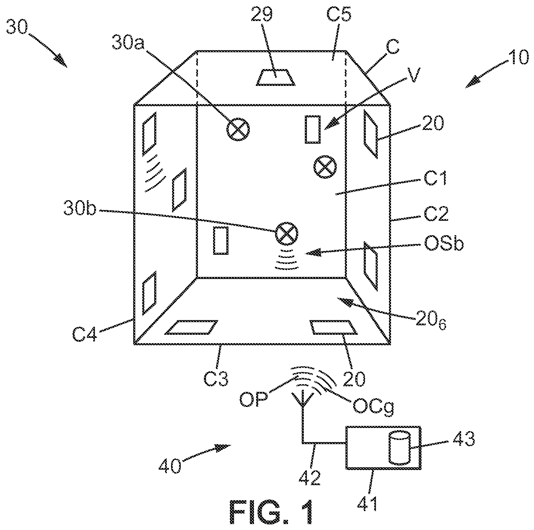

La **figure 1** est une vue schématique en perspective d'un mode de réalisation d'un **système 10** de détection de récepteurs. Dans cet exemple, le système 10 comprend un **contenant C** ayant un **volume V.** Le contenant C peut être optionnel, et le volume V défini sans parois physiques. Le contenant C est adapté pour contenir dans son volume V un, deux ou une pluralité de récepteurs. Parmi ces récepteurs, un ou plusieurs peuvent être des **récepteurs réglables 30** qui une fois détectés peuvent être contrôlés pour participer à la détection d'autres récepteurs, éventuellement contenus dans le volume V. Les récepteurs réglables peuvent comprendre notamment un **premier récepteur réglable 30a** et un **deuxième récepteur réglable 30b.** Les récepteurs réglables 30 peuvent être statiques ou mobiles. En soit une identification ou une simple communication correspond également à une détection. Ainsi, le système 10 est un système de détection de récepteur et/ou d'identification de récepteur et/ou de communication avec un récepteur. Selon un exemple, le (ou les) récepteur réglable 30 est attaché à une marchandise (e.g. articles à la vente), et le contenant C est un bac d'une caisse de magasin. Ainsi, simplement en posant les articles dans le bac, la caisse peut identifier les articles sans les scanner un par un. D'autres applications sont décrites dans la présente divulgation.

Comme il sera décrit plus bas, les récepteurs réglables identifiés participent au fur et à mesure de leur identification à l'identification d'autres récepteurs présents dans le volume V. Bien que seulement deux récepteurs réglables 30a, 30b sont illustrés dans les figures, il se pourrait que le système 10 ait trois ou plus récepteurs similaires aux récepteurs réglables 30a, 30b. Il se pourrait que parmi ceux identifiés, certains ne soient pas des récepteurs dont l'impédance peut être réglable.

Dans le cas particulier de la figure 1, le contenant C est un parallélépipède comprenant une **face de fond C₁,** et quatre **faces latérales C₂, C₃, C₄, C₅** et une **face d'ouverture C₆** en opposition de la face de fond C₁. Des récepteurs réglables 30 tels que le premier récepteur réglable 30a et le deuxième récepteur réglable 30b peuvent être introduits et/ou être extraits du volume à travers la face d'ouverture C₆. Ces récepteurs réglables 30 peuvent également être déplacés dans le volume V. Le premier récepteur réglable 30a et le deuxième récepteur réglable 30b sont globalement identiques et seront décrits en détail ci-après en référence à un récepteur générique 30.

Le système 10 comprend en outre :
- une **antenne globale 42** adaptée pour émettre une **onde primaire OP** dans le volume V, et adaptée pour recevoir une **onde secondaire OS** respectivement émise par chaque récepteur réglable 30 positionné dans le volume V en réponse de la réception par ce récepteur de l'onde primaire OP, et
- un **contrôleur global 41** relié à l'antenne globale 42, le contrôleur global 41 étant adapté pour commander l'émission de l'onde primaire OP et pour identifier le ou les récepteurs réglables 30 par l'onde secondaire OS correspondante émise par le ou les récepteurs réglables 30 et reçue par l'antenne globale 42. Le contrôleur global 41 et l'antenne globale 42 sont montrés sur les figures selon un mode de réalisation comme étant disposés à l'extérieur du volume V. Il se pourrait alternativement que le contrôleur global 41 et l'antenne globale 42 soient disposés, tous les deux, ou seulement un des deux, à l'intérieur du volume V.

### RECEPTEUR RÉGLABLE

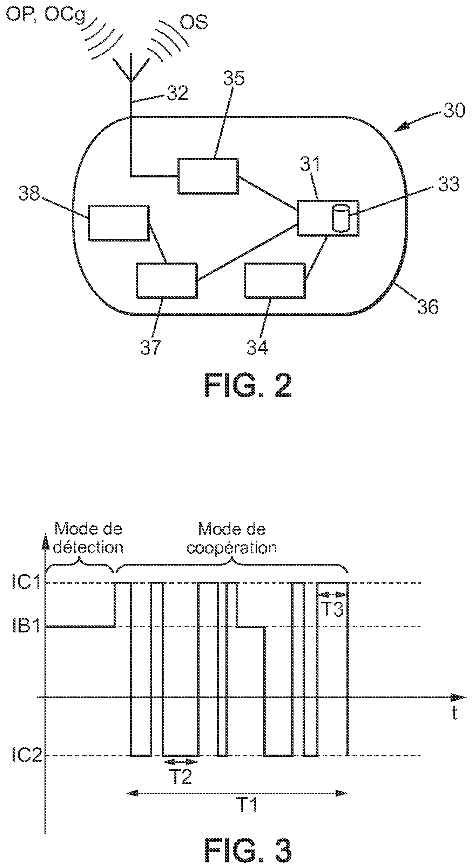

Un des récepteurs réglables 30 est illustré schématiquement à la **figure 2****.** Le premier récepteur réglable 30a et le deuxième récepteur réglable 30b étant similaires au récepteur réglable générique 30, la description de la structure et du mode de fonctionnement du récepteur réglable 30 vaudra de description pour le premier récepteur réglable 30a et le deuxième récepteur réglable 30b, en sachant que les éléments communs seront annotés de l'indice « a » pour le premier récepteur réglable 30a et de l'indice « b » pour le deuxième récepteur réglable 30b.

Le récepteur réglable 30 comprend une **antenne 32** adaptée pour émettre l'onde secondaire OS en réponse de la réception de l'onde primaire OP émise par l'antenne globale 42. Le récepteur réglable 30 comprend aussi un **contrôleur 31** relié à l'antenne 32 et un **composant réglable 35** connecté au contrôleur 31 d'une part, et à l'antenne 32 d'autre part. Le contrôleur 31 est configuré pour commander l'émission de l'onde secondaire OS, et pour détecter l'onde primaire OP reçue et en décoder l'information contenue. Le contrôleur 31 contrôle de plus l'impédance du composant réglable 35, ce qui influe sur l'onde secondaire OS émise par l'antenne 32. Le composant réglable 35 peut être connecté au contrôleur 31 de façon filaire ou non filaire. Une onde de contrôle locale OCl peut être envoyée du contrôleur 31 au composant réglable 35 pour transmettre les paramètres de réglage au composant réglable 35.

Chaque composant réglable 35 a une antenne associée. Cette antenne peut être l'antenne 32 du récepteur réglable 30 ou une antenne séparée.

Selon un mode de réalisation, au moins un des récepteurs réglables 30 comprend une pluralité de composants réglables 35. Le récepteur réglable 30 pourrait comprendre plusieurs composants réglables 35, chaque composant ayant une antenne associée. Dans un autre mode de réalisation, le récepteur réglable 30 comprend une seule antenne pour la pluralité de composants réglables 35 de ce récepteur. Le récepteur réglable 30 peut comprendre un ou plusieurs contrôleurs 31 pour piloter le tout. Par simplification, la présente description décrira, en exemple, des récepteurs réglables ayant chacun une antenne, un contrôleur et un composant réglable, étant entendu qu'il pourrait y avoir plusieurs antennes et/ou plusieurs composants réglables et/ou plusieurs contrôleurs par récepteur réglable.

### STRUCTURE GÉNÉRALE

Le récepteur réglable 30 est par exemple un dispositif de technologie dite radio-identification ou dite RFID pour « radio frequency identification » en langue anglaise.

Le récepteur réglable 30 est par exemple un objet connecté, par exemple de type internet des objets (IoT) ou de type à transmission par WiFi ou par Bluetooth ou par un réseau LoRA.

Le récepteur réglable 30 pourrait comprendre un ou plusieurs capteurs (e.g. température, humidité, détection de présence, détection d'un gaz, débit, tension, courant). Une ou plusieurs des valeurs mesurées par un capteur seraient enregistrées dans une mémoire de récepteur ou toute autre mémoire et pouràrait être transmise au contrôleur global 41 par l'intermédiaire de l'onde secondaire OS.

Le contrôleur 31, l'antenne 32 et le composant réglable 35 d'un même récepteur 30 peuvent être regroupés sur une **base 36** de sorte que le récepteur 30 forme un objet compact. Selon un mode de réalisation, la base 36 est par exemple une étiquette pour habits ou fournitures, de faible épaisseur, e.g. d'épaisseur inférieure à 0,2 mm, par exemple constitué d'un matériau polymère souple. Le composant réglable 35, l'antenne 32 et le contrôleur 31 peuvent par exemple être fixés sur la base 36 par adhésion. Le composant réglable 35, l'antenne 32 et le contrôleur 31 du récepteur réglable 30 sont eux même des circuits de faible épaisseur, de sorte que le récepteur réglable 30 est un dispositif de faible épaisseur et souple qui est associé à un article.

### COMPOSANTS REGLABLES

Il existe plusieurs façons d'obtenir un récepteur réglable 30 à impédance variable.

Le composant réglable 35 du récepteur réglable 30 est par exemple constitué d'au moins un circuit électronique réglable connecté à l'antenne 32 afin d'en modifier l'impédance de rayonnement électromagnétique, ce qui caractérise son interaction avec le champ électromagnétique et notamment les ondes autour du récepteur. Le (ou les) circuit électronique réglable est par exemple une capacité, une diode, un transistor, ou une combinaison de ceux-ci. Ce circuit électronique réglable comprend une entrée pilotable par le contrôleur 31 afin de modifier une de ses caractéristiques électronique, c'est-à-dire plus généralement son impédance électrique qui est l'impédance de charge de l'antenne 32 du récepteur réglable 30. Cette modification implique la modification de l'impédance de rayonnement de l'antenne 32 et l'interaction avec les ondes.

Le composant réglable 35 est donc pilotable par une entrée qui pourra être modifiée par exemple par une valeur de tension électrique imposée par le contrôleur 31, et qui correspond par exemple à une ou des valeurs de paramètres de réglage. Ces paramètres de réglage peuvent être déterminés par le contrôleur global 41 ou alternativement par le contrôleur 31 du récepteur réglable, comme explicité plus en détail ci-après.

La modification de l'impédance du récepteur réglable 30 modifie la répartition spatiale de l'onde primaire OP dans le volume V. Cette modification peut être optimisée de façon à détecter d'autres récepteurs contenus dans le volume V, initialement non identifiés par le contrôleur global 41. De plus, au fur et à mesure de la détection des récepteurs dans le volume V, ceux-ci deviennent commandés par le contrôleur global 41 pour participer à la modification de la répartition spatiale de l'onde primaire OP pour détecter plus efficacement d'éventuels autres récepteurs présents dans le volume V. La modification de l'impédance du récepteur réglable 30 est bien plus complexe qu'une focalisation ou une directivité spatiale, c'est une modification du champ électromagnétique dans le volume autour du récepteur.

### MODES

Lorsque l'impédance du récepteur réglable 30 est modifiée, la manière dont l'onde primaire OP est réfléchie et/ou transmise par le récepteur réglable 30 l'est aussi, ce qui influe sur le champ électromagnétique global dans le volume V. Cette modification est ici employée pour détecter d'autres récepteurs invisibles du contrôleur global 41. Ainsi, le contrôleur global 41 peut commander le récepteur réglable 30 de passer à un ***mode de coopération*** dans lequel le récepteur réglable 30 a son impédance changeante afin de modifier le champ électromagnétique global dans le volume V. Cette modification du champ électromagnétique peut aider à détecter un ou plusieurs autres récepteurs jusque-là muets vis-à-vis du contrôleur global 41.

Chaque récepteur réglable 30 contenu dans le volume V est initialement non détecté par le contrôleur global 41 et est dans un ***mode de détection.*** Dans le mode de détection, le récepteur réglable 30 a une **impédance de base IB1.** L'impédance de base IB1 est par exemple une impédance de charge de l'antenne 32 du récepteur réglable 30, c'est-à-dire une impédance adaptée à recevoir un maximum d'énergie. Par exemple l'impédance de base IB1 d'un récepteur réglable 30 est de 11 + 143*j (j est le complexe pour lequel j^2=-1). Selon un mode de réalisation, l'impédance de base IB1 d'un récepteur réglable 30 est imposée par son contrôleur 31 indépendamment du contrôleur global 41. Selon un autre mode de réalisation, l'impédance de base IB1 d'un récepteur réglable 30 est commandée par le contrôleur global 41. Dans le ***mode de détection,*** le récepteur réglable 30 pourrait avoir plusieurs impédances de base, et le contrôleur 31 du récepteur réglable 30 pourrait alterner entre ces différentes impédances de base. Cette alternance pourrait se faire sans que le contrôleur global 41 commande le contrôleur 31 du récepteur réglable 30, ou alternativement sous le contrôle du contrôleur global 41.

Lorsque l'antenne globale 42 reçoit l'onde secondaire OSa émise par un récepteur se trouvant dans le volume V et que le récepteur est un récepteur réglable 30, le contrôleur global 41 peut commander le contrôleur 31 de ce récepteur réglable 30 de passer dans le ***mode de coopération,*** pour aider à identifier d'autres récepteurs contenus dans le volume.

Dans le mode de coopération l'impédance du récepteur réglable 30 est alternée entre une **première impédance de configuration IC1** et une **deuxième impédance de configuration IC2.** Par exemple, la première impédance de configuration IC1 est de IB1 - 20j, et la deuxième impédance de configuration IC2 est de IB1 + 20j. La première impédance de configuration IC1 pourrait être infinie et la deuxième impédance de configuration IC2 pourrait être nulle ou de module faible ou proche de zéro. Il se pourrait que l'impédance de l'élément réglable 35 soit alternée entre trois ou plus impédances de configuration. Au moins une des première et deuxième impédances de configuration IC1, IC2 pourrait être l'impédance de base IB afin d'être adaptée à récupérer de l'énergie.

Selon un mode de réalisation, la première impédance de configuration IC1 est éloignée de la deuxième impédance de configuration IC2. Par « éloignée » on entend qu'elles ont par exemple un ordre de magnitude d'au moins 10 entre elles. Une impédance est une valeur complexe, ainsi une impédance peut être considérée comme éloignée d'une autre impédance lorsque par exemple :
- leurs modules ont des valeurs éloignées l'un de l'autre, comme par exemple un rapport de magnitude d'au moins 2 entre eux, et de préférence d'au moins 10 (comme cité ci-dessus), ou
- leurs phases ont des valeurs éloignées l'une de l'autre, comme par exemple des valeurs de écartées d'au moins pi/4, et de préférence supérieur à pi/2, ou
- le module de la différence de la première et de la deuxième impédance a une valeur importante, par exemple supérieure à une valeur seuil, ou par exemple supérieure au module de la première impédance et/ou supérieur au module de la deuxième impédance.

De nombreux critères d'éloignements entre les impédances peuvent être définis.

Une petite variation de l'impédance des composants réglables permet de modifier grandement l'impédance de rayonnement de l'antenne qui fonctionne comme un résonateur : notamment à la fréquence de base de ce résonateur, l'amplitude et la phase de l'impédance vue par les ondes électromagnétiques va fortement varier par ce petit changement d'impédance de charge. Ainsi, l'antenne étant dispersive, une petite modification de son impédance de charge autour de sa fréquence de résonance permet d'obtenir une alternance de type éloignée entre une première impédance de configuration IC1 et une deuxième impédance de configuration IC2. En outre, ce type résonateur est assez facile à implémenter dans un récepteur réglable 30 de faible dimension et notamment de faible épaisseur.

Selon un autre mode de réalisation, la première impédance de configuration IC1 et la deuxième impédance de configuration IC2 sont proches de l'impédance de base IB. Par « proche » on entend qu'elles ont un ordre de magnitude d'au plus 10 entre elles. Une impédance est une valeur complexe, ainsi une impédance est proche d'une autre impédance lorsque leurs modules et/ou leurs phases et/ou le module de leur différence complexe sont proches l'une de l'autre. Un avantage d'avoir la première impédance de configuration IC1 et la deuxième impédance de configuration IC2 proches de l'impédance de base IB est que le récepteur réglable 30 est adapté à récupérer de l'énergie et reste alimenté durant le mode de coopération. Selon un mode de réalisation, la première impédance de configuration IC1 et la deuxième impédance de configuration IC2 sont proches et de part et d'autre de l'impédance de base dans le plan complexe.

La première impédance de configuration IC1 et la deuxième impédance de configuration IC2 pourraient être toutes les deux supérieures à l'impédance de base IB1, ou bien toutes les deux inférieures à l'impédance de base IB1, ou bien une supérieure et une inférieure à l'impédance de base IB1.

Dans le mode de coopération, il y a donc une alternance assez fréquente entre les deux ou plus impédances de configuration, dans le sens où la **durée T1 du mode de coopération** est d'ordre de magnitude supérieur par rapport à la **durée T2, T3 de chaque alternance** des première et deuxième impédances de configuration IC1 et IC2. La **figure 3** illustre par exemple ce point. Selon un exemple la durée T1 du mode de coopération est de 100ms, et la durée T2, T3 de chaque alternance des première et deuxième impédances de configuration IC1 et IC2 est de 10ms.

### SORTIE DU MODE DE COOPERATION

Chaque récepteur réglable détecté et basculé en mode de coopération par le contrôleur global 41 peut rester dans le mode de coopération jusqu'à ce que tous les récepteurs présents dans le volume V soient détectés.

Le (ou les) récepteur réglable 30 peut sortir du mode de coopération au bout d'une durée de temps prédéterminée qui pourrait correspondre à un temps jugé suffisant pour détecter tous les récepteurs présents dans le volume V, par exemple quelques dizaines ou quelques centaines de millisecondes. Cette durée de temps pourrait être imposée par le contrôleur global 41 ou bien être imposée par le contrôleur 31 du récepteur réglable 30. Il se pourrait que ce temps soit différent pour chaque ou plusieurs des récepteurs contenus dans le volume V. Ce temps pourrait être aléatoire.

Selon un autre mode de réalisation, le contrôleur global 41 commande la sortie des récepteurs réglables du mode de coopération. Le contrôleur global 41 peut commander cette sortie à tous les récepteurs réglables détectés de façon simultanée, ou bien par groupe de récepteurs.

Selon un autre mode de réalisation, le récepteur réglable 30 reste en mode de coopération jusqu'à ce que l'énergie stockée dans ce récepteur réglable soit en dessous d'une valeur minimum.

### ALTERNANCE BASÉE SUR DES SÉQUENCES PREDEFINIES OU ALEATOIRES

Selon un mode de réalisation, le contrôleur global 41 définit périodiquement des paramètres de réglages pour les composants réglables 35 des récepteurs 30 qu'il a détecté de manière aléatoire ou de manière prédéfinie pour balayer un ensemble de combinaisons des paramètres de réglage, ce qui permet de balayer le volume V du contenant avec des champs électromagnétiques variés. À chaque alternance d'impédance, le contrôleur global 41 émet concomitamment une onde primaire OP pour détecter des récepteurs avec ce nouveau réglage. Le contrôleur global 41 pourrait alternativement émettre l'onde primaire OP temporellement après l'envoi des paramètres de réglage d'impédance. Selon une variante de ce mode de réalisation, le contrôleur global 41 commande seulement le passage des récepteurs identifiés du mode de détection au mode de coopération, et le contrôleur de chaque récepteur réglable 30 identifié définit périodiquement des paramètres de réglages pour ses composants réglables 35 de manière aléatoire pour balayer un ensemble de combinaisons des paramètres de réglage.

Selon un autre mode de réalisation, la temporisation des alternances n'est pas périodique, mais irrégulière, dictée ou aléatoire.

Selon un autre mode de réalisation, une fois qu'un récepteur réglable 30 est détecté et est en mode de coopération, son contrôleur 31 est passif et le contrôleur global 41 commande les alternances des impédances des récepteurs réglables 30 via le contrôleur 31 du récepteur réglable.

Selon un mode de réalisation, le contrôleur global 41 commande uniquement le passage en mode de coopération du ou des récepteurs identifiés, et le ou les contrôleurs 31 de ce ou ces récepteurs commandent les alternances des impédances des récepteurs réglables 30. Ces alternances peuvent être préprogrammées. À cette fin, chaque contrôleur 31 du récepteur réglable 30 peut inclure une **mémoire 33** qui contiendrait une programmation de séquences d'impédances de coopération à alterner (avec éventuellement une temporisation associée à la séquence ou à chaque alternance, par exemple alternance après une durée d'alternance de l'ordre de quelque millisecondes à quelques centaines de millisecondes) lorsque le récepteur réglable 30 est passé en mode de coopération par le contrôleur global 41.

### ALTERNANCE BASÉE SUR L'OPTIMISATION

Selon un autre mode de réalisation, la modification du champ électromagnétique par le ou les récepteurs réglables 30 qui sont passées en mode de coopération peut se faire de façon à optimiser ce champ électromagnétique pour détecter d'autres récepteurs. L'optimisation permet d'utiliser plusieurs récepteurs réglables 30 (ceux détectés) pour améliorer le champ électromagnétique dans le volume V et ainsi détecter d'autres récepteurs qui n'auraient pas pu l'être auparavant. Le contrôleur global 41 surveille les ondes secondaires OS reçues par l'antenne globale 42 (lorsque celles-ci le sont) provenant des différents récepteurs réglables 30 détectés. À travers ces ondes, le contrôleur global 41 peut par exemple déterminer des informations de réception concernant la réception de l'onde secondaire OS reçue par son antenne globale 42, ces informations de réception étant par exemple le niveau de réception et/ou la qualité de réception.

Le contrôleur global 41 peut alors utiliser les informations de réception pour estimer une valeur à optimiser (valeur d'optimisation), cette valeur étant une des informations ou une combinaison de ces informations de réception.

Le contrôleur global 41 exécute par exemple un algorithme d'optimisation sur la base du jeu de paramètres précédents (temporellement), des valeurs estimées précédentes et de la valeur estimée actuelle.

L'algorithme d'optimisation peut être une maximisation ou une minimisation de la valeur estimée, selon la grandeur représentée par cette valeur. En une ou plusieurs étapes successives, l'algorithme d'optimisation permet d'obtenir un jeu de paramètres optimal pour détecter un nouveau récepteur réglable 30. A chaque étape ou avec des périodicités prédéterminées, le contrôleur global 41 applique le nouveau jeu de paramètres aux récepteurs réglables 30 qu'il a identifié et/ou détermine des informations de réceptions pour effectuer l'itération suivante. Ces itérations peuvent être effectuées à une cadence très élevée de sorte que la durée de cette optimisation est très faible au regard du nombre de récepteurs à détecter et/ou identifier dans le volume.

Le jeu de paramètres optimal permet par exemple d'améliorer le niveau de réception de l'onde secondaire OS sur l'antenne globale 42. Grâce à cette modification par l'état optimisé des composants réglables des récepteurs identifiés, comme par exemple le premier récepteur 30, le champ de propagation de l'onde secondaire OS est amélioré vers l'antenne globale 42, et la détection et/ou identification de récepteur, comme par exemple celle d'un deuxième récepteur 30b jusque-là non identifié dans le volume V est améliorée voire devenue possible.

Ainsi, selon un mode de réalisation, le contrôleur global 41 détermine le jeu de paramètres pour le réglage de la pluralité de composants réglables des récepteurs identifiés par le contrôleur global 41 par exemple pour optimiser la réception de l'onde secondaire par l'antenne globale 42. L'optimisation porte sur la valeur estimée qui est par exemple une estimation du niveau de réception et/ou de la qualité de réception de l'onde secondaire par l'antenne globale 42.

### OPTIMISATION DYNAMIQUE

L'optimisation est dynamique, c'est-à-dire que le nombre de paramètres envoyés par le contrôleur global 41 aux récepteurs réglables 30 pour régler les composants réglables 35 augmente au fur et à mesure de la détection de nouveaux récepteurs dans le volume V. Ainsi, lorsqu'un premier récepteur réglable 30a est détecté, le contrôleur global 41 va commander le changement de l'impédance de ce récepteur réglable, et va faire de même ensuite pour chaque nouveau récepteur réglable détecté. Ainsi au bout de quelques itérations, par exemple cinq récepteurs réglables 30 seront contrôlés par le contrôleur global 41 pour détecter un nouveau récepteur présent dans le volume V.

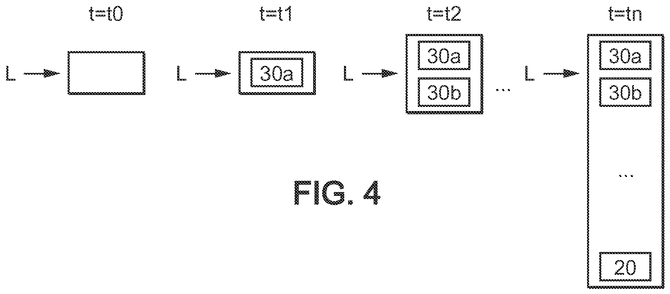

Pour illustrer, prenons l'exemple du premier récepteur 30a et du deuxième récepteur 30b présents dans le volume V, en faisant l'hypothèse qu'ils sont initialement non identifiés par le contrôleur global 41. Le premier 30a et le deuxième 30b récepteurs sont initialement (t=t0) dans le ***mode de détection*** avec respectivement, une **impédance de base IBa, IBb** fixée uniquement par leur contrôleur 31a, 31b associé (indépendamment du contrôleur global 41). Dans une première étape, ***étape de détection du récepteur,*** le premier récepteur 30a est détecté par le contrôleur global 41 lorsque l'antenne globale 42 reçoit l'onde secondaire OSa émise par le premier récepteur 30a (temps t=t1). Le contrôleur global 41 peut alors ajouter le premier récepteur 30a à une **liste dynamique L** de récepteurs identifiés (voir **figure 4****).** La liste dynamique L peut être sauvegardée dans une mémoire du contrôleur global 41. La liste est dynamique car elle est mise à jour en temps réel en y ajoutant les récepteurs détectés par le contrôleur global 41 au fur et à mesure de leur détection et de leur passage en mode de coopération.

Lors d'une troisième étape, **étape *de détection du deuxième récepteur,*** l'antenne globale 42 reçoit l'onde secondaire OSb émise par le deuxième récepteur 30b. Le contrôleur global 41 identifie le deuxième récepteur 30b et peut alors ajouter le deuxième récepteur 30b à sa liste dynamique L de récepteurs identifiés (temps t=t2). Le contrôleur global 41 commande de plus le contrôleur 31b du deuxième récepteur 30b de passer en ***mode de coopération*** dans lequel l'impédance du deuxième récepteur réglable 30b alterne au moins entre une première impédance de configuration IC1b et une deuxième impédance de configuration IC2b.

Selon un mode de réalisation, la première impédance de configuration IC1b du deuxième récepteur 30b est éloignée de la deuxième impédance de configuration IC2b du deuxième récepteur 30b. Par « éloignée » on entend qu'elles ont par exemple un ordre de magnitude d'au moins 10 entre elles. Une impédance est une valeur complexe, ainsi une impédance peut être comme éloignée d'une autre impédance lorsque par exemple :
- leur modules ont des valeurs éloignées l'un de l'autre, comme par exemple un rapport de magnitude d'au moins 2 entre eux, et de préférence d'au moins 10 (comme cité ci-dessus), ou
- leurs phases ont des valeurs éloignées l'une de l'autre, comme par exemple des valeurs de écartées d'au moins pi/4, et de préférence supérieur à pi/2, ou
- le module de la différence de la première et de la deuxième impédance a une valeur importante, par exemple supérieure à une valeur seuil, ou par exemple supérieure au module de la première impédance et/ou supérieur au module de la deuxième impédance.

De nombreux critères d'éloignements entre les impédances peuvent être définis.

### OPTIMISATION AVEC PARAMÈTRES PRÉENREGISTRÉS

Selon un mode de réalisation, le contrôleur global 41 définit périodiquement des paramètres de réglages pour les composants réglables des récepteurs détectés selon une table pré-enregistrée pour balayer un ensemble de combinaisons des paramètres de réglages.

Cette table pré-enregistrée est par exemple définie par connaissance de la propagation des ondes primaires OP dans le volume V soit par simulation, soit par mesure du milieu du volume V. La table pré-enregistrée est par exemple définie pour s'assurer de pouvoir balayer l'intégralité du volume V avec une précision spatiale prédéterminée.

Ensuite, le contrôleur global 41 procède comme précédemment : à chaque réglage des composants réglables des récepteurs identifiés, le contrôleur global 41 commande aussi l'émission d'une onde primaire OP pour détecter des récepteurs avec ce nouveau réglage. Cette procédure lui permet de détecter un ou plusieurs nouveaux récepteurs (réglables ou pas) dans le volume V. Après un nombre prédéfini de combinaisons, cette procédure permet de connaitre l'ensemble des récepteurs du volume V.

Selon une variante, le contrôleur global 41 effectue périodiquement, par exemple durant une plage temporelle prédéterminée (une plage horaire et/ou une journée déterminée durant une semaine et/ou durant un mois), une calibration de ladite table pré-enregistrée en recherchant les paramètres de réglage optimum pour des récepteurs réglables 30 de référence.

Cette autre optimisation peut être basée sur l'onde secondaire OS reçue par le contrôleur global 41. Le contrôleur global 41 détermine des informations de réception concernant la réception de l'onde secondaire OS de retour par son antenne (niveau de réception et/ou qualité de réception). Le contrôleur global 41 effectue alors une optimisation de l'ensemble des paramètres de réglage pour des récepteurs réglables 30 identifiés.

Suite à ces optimisations des paramètres de réglages pour des récepteurs réglables identifiés, le contrôleur global 41 en déduit la table pré-enregistrée par diverses techniques, telle qu'un modèle de paramétrage et/ou une technique d'interpolation.

Selon une variante de ce mode de réalisation, le contrôleur global 41 commande seulement le passage des récepteurs réglables 30 identifiés du mode de détection au mode de coopération, et le contrôleur 31 de chaque récepteur définit périodiquement des paramètres de réglages pour les composants réglables selon une table préenregistrée dans la mémoire du récepteur considéré pour balayer un ensemble de combinaisons des paramètres de réglage.

### RECEPTEUR - IDENTIFICATION

En outre, la mémoire 33 de chaque récepteur 30 peut comprendre un **identifiant du récepteur réglable IDrr,** permettant de différencier les récepteurs entre eux (les identifiants sont tous différents).

Dans ce cas, le contrôleur global 41 peut émettre dans une émission d'onde de contrôle globale OCg une **information d'identification IID** avec un paramètre de réglage de l'impédance, ce qui permet de désigner le récepteur réglable identifié du système 10 à qui est destiné ledit paramètre de réglage. Ainsi, le contrôleur global 41 émet par exemple l'ensemble du jeu de paramètres (tous les paramètres de réglage) séquentiellement, chaque paramètre de réglage étant associé à une information d'identification pour que le récepteur réglable 30 destinataire dudit paramètre de réglage soit le seul à appliquer ledit paramètre de réglage en question.

Dans le cas où le récepteur réglable 30 inclut une pluralité de composants réglables avec leurs antennes associées, l'onde de contrôle globale contient une information d'identification avec un paramètre de réglage associé pour désigner chaque composant réglable à qui est destiné ledit paramètre de réglage, et le composant réglable pilote l'impédance de l'antenne associée par rapport au paramètre de réglage si l'information d'identification est égale à son **identifiant de composant réglable IDcr.**

Le récepteur 30 peut ainsi comprendre un **dispositif de réception 34** de l'onde de contrôle globale OCg qui décode un paramètre de réglage contenu dans cette onde de contrôle globale OCg, en provenance du contrôleur global 41. Le contrôleur 31 du récepteur réglable 30 utilise alors le paramètre de réglage pour piloter et modifier l'impédance du composant réglable 35 associé.

Le dispositif de réception 34 du récepteur 30 décode alors dans l'onde de contrôle globale OCg, l'information d'identification IID et le paramètre de réglage. Ensuite, le récepteur réglable 30 pilote son impédance (i.e. le composant réglable 35 pilote l'impédance de son antenne associée) en fonction du paramètre de réglage si l'information d'identification est égale à son identifiant de récepteur réglable IDrr.

Le contrôleur global 41 émet éventuellement périodiquement des ondes primaires OP dans le volume V du contenant C pour détecter et identifier des récepteurs, et il émet périodiquement des ondes de contrôle globales OCg dans le volume V pour régler les récepteurs réglables 30 qui ont été détectés. Chaque récepteur réglable 30 détecté sélectionne alors le paramètre de réglage qui lui est destiné.

Selon une variante, la mémoire 33 du (ou des) récepteur réglable 30 mémorise un ensemble de paramètres de réglage (pré-enregistrés et/ou enregistré par transmission du contrôleur) et une (ou plusieurs) période de lecture associée à ces paramètres de réglage. Cet ensemble de paramètres de réglages et périodes de lecture sont connus du contrôleur global 41. Cette disposition peut permettre au contrôleur global 41 d'éviter d'envoyer systématiquement des nouveaux paramètres de réglage aux récepteurs réglables ; i.e. ce qui limite le besoin de transmission. Eventuellement, cet ensemble de paramètres de réglage et/ou ces périodes de lecture sont différents pour chaque récepteur réglable 30.

Selon une première variante du contrôleur global 41, le contrôleur global 41 comprend dans sa mémoire 43 la liste dynamique L des identifiants des composants réglables ou du récepteur réglable s'il n'a qu'un seul composant réglable, cette liste étant renseignée avec les identifiants de récepteur réglable IDrr du système 10 identifiés pour pouvoir émettre l'identifiant du composant réglable avec le paramètre de réglage. Chaque récepteur réglable 30 émet éventuellement périodiquement par une onde de retour, qui peut être l'onde secondaire Osa, son identifiant de récepteur réglable IDrr. Le contrôleur global 41 établit alors la liste des récepteurs réglables 30 identifiés dans le système 10 et la met à jour à chaque réception d'un nouvel identifiant de récepteur. En outre, un récepteur réglable 30 pourra être retiré de la liste dynamique ou pourra être désactivé dans ladite liste (par un drapeau d'activité) si le contrôleur global 41 ne reçoit plus l'identifiant du récepteur réglable 30 depuis une durée supérieure à une durée limite d'inactivation d'un récepteur réglable 30.

Ainsi, par ce fonctionnement dynamique, le contrôleur global 41 utilisera toujours des récepteurs réglables 30 efficaces ou fonctionnels. Ce fonctionnement dynamique facilite aussi l'installation du système 10 qui s'adapte automatiquement aux récepteurs réglables 30 présents dans le volume V.

En outre, selon une variante, le récepteur réglable 30 émettra périodiquement son identifiant réglable IDrr uniquement en présence d'une onde primaire OP et/ou d'une onde de contrôle globale OCg en provenance de l'antenne 42 du contrôleur 41, notamment :
- soit parce que ce récepteur réglable 30 utilise un **dispositif de récupération d'énergie 37** de cette onde pour son fonctionnement. En absence d'énergie, le récepteur réglable 30 sera automatiquement éteint et ne diffusera pas son identifiant ;
- soit parce que ce récepteur réglable 30 est conçu pour ne pas émettre son identifiant s'il ne reçoit pas d'onde primaire OP ou d'onde de contrôle globale OCg depuis une durée supérieure à une durée de mise en veille prédéterminée.

### RECEPTEUR - COMMANDE ALTERNANCE IMPEDANCES

Les alternances des impédances dans le mode de coopération des récepteurs réglables 30 identifiés peuvent s'effectuer de différentes façons. Selon un mode de réalisation, un algorithme d'optimisation détermine les impédances de chacun des composants réglables de la liste dynamique L de façon itérative ayant pour but d'optimiser le champ électromagnétique dans le volume V.

Selon une variante, le contrôleur global 41 comprend une mémoire qui enregistre un ou plusieurs jeux de paramètres optimaux pour détecter des récepteurs présents dans le volume V et qui seraient encore non identifiés. De cette manière, l'algorithme d'optimisation peut démarrer son processus à partir de l'un ou de plusieurs des jeux de paramètres enregistrés ce qui permet de gagner du temps sur l'optimisation et d'éviter des effets transitoires.

Selon une variante, l'algorithme d'optimisation surveille sa performance et arrête ses itérations d'optimisation lorsqu'un critère d'arrêt est atteint. Le critère d'arrêt peut être la réception par le contrôleur global 41 d'un identifiant d'un récepteur non encore identifié. On peut éviter ainsi des variations ou fluctuations non significatives de la réception de l'onde secondaire OS.

Enfin, les précédents modes de réalisation du contrôleur global 41 peuvent être combinés pour réaliser une partie des paramètres de réglage par optimisation sur l'onde secondaire OS reçue, une partie des paramètres de réglage par réglage aléatoire, et une partie des paramètres de réglage par prédéfinition dans le volume V. Cette stratégie permet d'identifier encore plus de récepteurs dans le volume V, et de manière plus rapide.

En outre, pour qu'un récepteur puisse recevoir et décoder un paramètre de réglage qui lui est destiné, le contrôleur global 41 détermine ce paramètre de réglage par exemple selon la procédure d'optimisation décrite ci-dessus pour chaque récepteur réglable 30 inclut dans le système 10 (c'est-à-dire les récepteurs détectés et répertoriés par le contrôleur global 41 dans la liste dynamique L à cet instant), et le contrôleur global 41 transmet chaque paramètre de réglage à destination du récepteur associé correspondant dans l'émission d'une onde de contrôle globale OCg différente de l'onde primaire OP.

Notamment, cette transmission dans une onde de contrôle OC est effectuée par tout type de codage et/ou tout type de modulation dans le signal d'émission de l'onde de contrôle globale OCg que le contrôleur global 41 fournit à l'antenne globale 42.

Selon une variante, le contrôleur global 41 peut commander à tous les récepteurs réglables 30 en même temps de changer leur impédance ou de régler leur impédance, en fonction d'un paramètre qui est propre à chaque récepteur. Par exemple, une commande peut être émise qui dépend de l'identité de chaque récepteur (« celle-ci comprend un 0 ou pas », « celle-ci a son dernier numéro pair », etc...), et qui modifie l'impédance de chaque réception selon une formule définie.

### RECEPTEUR - RECUPERATION D'ENERGIE

En outre, en référence à la Figure 2, un (ou plusieurs) récepteur réglable 30 peut inclure en outre un **organe de stockage d'énergie 38** adapté pour conserver et éventuellement accumuler de l'énergie reçue par le dispositif de récupération d'énergie 37. De cette manière, le récepteur réglable 30 aura plus d'autonomie et il est capable de fonctionner pendant une durée déterminée par la capacité dudit organe de stockage d'énergie. Cet organe de stockage d'énergie est par exemple une capacité électrique, ou une batterie, ou tout autre dispositif de stockage d'énergie.

Le dispositif de récupération d'énergie 37 est par exemple apte à récupérer de l'énergie de l'onde primaire OP et/ou de l'onde de contrôle globale OCg pour alimenter son dispositif de réception 34 et/ou son contrôleur 31 et/ou le ou les composants réglables 35.

Le récepteur réglable 30 peut être ainsi autonome en énergie et également autonome pour l'adaptation de son impédance. Le (ou les) composants réglables 35 de chaque récepteur réglable 30 pourrait ne pas avoir besoin de connexion filaire avec le contrôleur 31 du récepteur réglable 30, et disposer également de leur dispositif de récupération d'énergie.

Avantageusement, tous les récepteurs réglables du système 10 peuvent avoir chacun (individuellement) leur dispositif de récupération d'énergie 37 et sont ainsi indépendants les uns des autres.

### ELEMENTS REGLABLES

Optionnellement, et en faisant référence de nouveau à la **figure 1****,** le système 10 **peut** comprendre en outre un (ou plusieurs) **élément réglable 20** fixes dans le volume V. Les éléments réglables 20 peuvent avoir une impédance qui peut être modifiée pour modifier la manière dont l'onde primaire OP est réfléchie et/ou transmise par chaque élément réglable 20, de la même manière que discuté précédemment pour les récepteurs réglables 30.

Les éléments réglables 20 sont structurellement et de fonctionnement similaire aux récepteurs réglables 30, excepté qu'ils sont fixes par rapport au volume V, sont identifiés en tout temps par le contrôleur global 41, et sont contrôlés en tout temps directement par le contrôleur global 41. Ainsi, ce sont des éléments passifs qui ont leur impédance dictée par le contrôleur global 41.

Les éléments réglables 20 sont de préférence en un nombre N supérieur ou égal à deux. Eventuellement, le nombre N est supérieur à cinq, ou dix ou vingt pour modifier encore plus la répartition de l'onde primaire OP dans le volume V.

Selon un mode de réalisation, l'onde de contrôle globale OCg ou l'onde primaire OP émise par le contrôleur global 41 permet de contrôler ou piloter les éléments réglables 20. Ainsi, le contrôleur global 41 peut contrôler ou piloter simultanément les éléments réglables 20 et récepteurs réglables 30 du système 10.

En outre, chaque élément réglable 20 comprend un **dispositif de réception** de l'onde de contrôle globale OCg qui décode un paramètre de réglage contenu dans cette onde de contrôle globale OCg, en provenance du contrôleur global 41. L'élément réglable 20 utilise alors le paramètre de réglage pour piloter et modifier son impédance.

L'onde de contrôle globale OCg peut être dans une bande de fréquence identique ou différente de l'onde primaire OP. Avantageusement, ces ondes sont à une fréquence différente, et les transmissions sont indépendantes.

En outre, comme les éléments réglables 20 sont fixés au contenant C en une pluralité de positions différentes, on peut modifier encore plus la répartition de l'onde primaire OP dans le volume V. Les positions des éléments réglables 20 sur le contenant C peuvent être optimisées pour couvrir au mieux le volume V avec un nombre minimum d'éléments réglables 20. Cette optimisation spatiale peut être effectuée par simulation et/ou mesure du volume V. Une marge peut être ajoutée au nombre d'éléments réglables 20 utilisés pour augmenter la robustesse d'identification du système 10.

### ELEMENTS REGLABLES - OPTIMISATION

Le ou les éléments réglables 20 peuvent être pris en compte dans les processus de réglage et/ou d'optimisation décrits ci-dessus pour les récepteurs réglables 30. Le ou les éléments réglables 20 étant en tout temps identifiés, ils peuvent aussi alors faire partie de la liste dynamique L.

### ELEMENTS REGLABLES - RECUPERATION ENERGIE

En outre, un, plusieurs ou tous les éléments réglables 20 (si ceux-ci font partis du système 10) peuvent comprendre **un dispositif de récupération d'énergie** similaire à celui décrit pour les récepteurs réglables 30 ci-dessus. L'élément réglable 20 peut être ainsi autonome en énergie et également autonome pour l'adaptation de son impédance. Dans ce cas, chaque élément réglable 20 n'aura pas besoin de connexion filaire avec un module de commande général, et il n'aura pas besoin de connexion filaire avec le contrôleur global 41 de ce système de détection 10.

### ELEMENTS REGLABLES - REPARTITION SPATIALE

Les éléments réglables 20, lorsque ceux-ci sont présents dans le système 10 peuvent se trouver dans le volume V sans avoir de contrainte de câblage (par exemple à l'intérieur ou à l'extérieur de ce contenant C ou sur toute surface du contenant C). Cela donne une grande liberté pour placer les éléments réglables 20 au mieux pour maximiser les possibilités de détection et d'identification de tous les récepteurs réglables 30 dans le volume V. Cela permet également d'équiper un contenant C très rapidement puisqu'il suffit seulement de fixer les éléments réglables 20 sur le contenant C et de positionner l'antenne globale 42 à proximité du volume V.

Les éléments réglables 20 peuvent être fixés au contenant C par tout moyen de fixation. Par exemple, les éléments réglables 20 sont fixés au contenant C par un adhésif ou par un clip élastique de fixation ou par une vis ou par un rivet ou par emboitement ou par emmanchement.

En outre, les éléments réglables 20 ont avantageusement une forme plane. Une portion de leur circuit électrique est par exemple directement imprimée sur un support. Le support est par exemple en papier ou en carton ou en plastique ou en tissu, et par exemple avec une face comprenant un adhésif. Eventuellement, la portion du circuit électrique comprend une antenne. Les éléments réglables 20 peuvent également présenter une flexibilité ce qui permet de les plier selon un rayon de courbure qui permet de les fixer sur des surfaces non planes. Grâce à ces dispositions, les éléments réglables 20 peuvent être facilement fixés sur un grand nombre de surfaces (plane ou non plane) d'un contenant, ce qui permet de les positionner à des emplacements adaptés pour contrôler le champ électromagnétique à l'intérieur du volume V.

### ELEMENT NON REGLABLES

Le système 10 selon l'invention peut comprendre en outre des **éléments non réglables 29** fixes dans le volume V ayant une impédance prédéterminée et fixe, cette impédance étant adaptée pour modifier la manière dont l'onde primaire OP est réfléchie et/ou absorbée par ledit élément non réglable 29.

Ce ou ces éléments non réglables 29 sont fixés au contenant C à des positions différentes. Ces éléments non réglables 29 permettent de modifier de manière non pilotable la répartition de l'onde primaire OP est répartie dans le volume V.

Par exemple, ces éléments non réglables 29 sont des éléments résonants dans la bande de fréquence de l'onde primaire OP.

Par exemple, un élément non réglable 29 peut effectuer une réflexion de l'onde primaire OP et/ou une absorption de l'onde primaire OP. Cet élément non réglable peut permettre de confiner l'onde primaire OP dans le volume V du contenant C pour optimiser l'efficacité dans le volume V des éléments réglables 20 et des récepteurs réglables 30.

Les positions des éléments non réglables 29 sur le contenant C peuvent être optimisées pour que l'onde primaire couvre au mieux le volume V avec un nombre minimum d'éléments réglables 20. Cette optimisation peut être effectuée par simulation et/ou par mesure (méthode expérimentale) du volume V.

### APPLICATION INDUSTRIELLE

Le système 10 incorporant des récepteurs réglables qui participent à la détection d'autres récepteurs par leur participation en nombre croissant à la modification et/ou l'optimisation du champ électromagnétique au fur et à mesure de leur identification par le contrôleur global 41 permet au contrôleur global 41 de déterminer plus rapidement d'autres récepteurs présents dans le volume V et non encore identifiés.

Ce système 10 a de nombreuses applications industrielles.

Par exemple dans:
- un mobilier (optionnellement équipé d'éléments réglables 20), tel qu'un mobilier de rangement et adapté à recevoir des produits, comme une armoire, un meuble étagère, chaque produit ayant un récepteur réglable attaché à celui-ci, ou tel qu'un mobilier de bureau comme un bureau, un tableau; ou
- un récipient de caisse enregistreuse d'un magasin (optionnellement équipé d'éléments réglables 20), dans lequel des produits sont insérés, chaque produit ayant un récepteur réglable 30 associé. Le système sera capable d'identifier les produits par les récepteurs réglables attachés à ces produits, et la caisse pourra établir une facture ; ou
- un chariot de course d'un magasin (optionnellement équipé d'éléments réglables 20) et contenant en son intérieur plusieurs articles à l'achat, chaque article ayant un récepteur réglable 30 associé ; ou
- un sac (optionnellement équipé d'éléments réglables 20), par exemple un sac de course, et contenant en son intérieur plusieurs articles ayant chacun un récepteur réglable 30 ; ou
- un véhicule automobile ou un avion ou un train (optionnellement équipé d'éléments réglables 20 et/ou de récepteurs réglables 30) et transportant en son intérieur du matériel ayant chacun un récepteur réglable 30 ; ou
- un local (optionnellement équipé d'éléments réglables 20), par exemple un local industriel tel qu'un entrepôt, ou un local d'habitation, ou un local d'un centre commercial, ayant des éléments mobiles avec chacun un récepteur réglable 30 associé ; ou
- une étagère de magasin, où chaque produit est équipé d'un récepteur réglable 30; ou
- une centre de stockage ou de transit de produits, qui peuvent être vendus par correspondance, et où chaque produit est équipé d'un récepteur réglable 30.

## Revendications

1. **Procédé de détection de récepteurs** mis en œuvre par un système de détection (10) comprenant une antenne globale (42) adaptée à émettre une onde primaire (OP), et un contrôleur global (41) relié à l'antenne globale, le système comprenant un récepteur réglable (30) ayant une antenne de récepteur (32) adaptée pour recevoir l'onde primaire et émettre une onde secondaire (OS), le récepteur réglable ayant un contrôleur de récepteur (31) relié à l'antenne de récepteur, le contrôleur de récepteur étant adapté à détecter l'onde primaire reçue par l'antenne de récepteur et à commander l'émission de l'onde secondaire par l'antenne de récepteur, le récepteur réglable ayant un composant réglable (35) connecté au contrôleur (31) et à l'antenne (32), le composant réglable (35) et donc le récepteur réglable, ayant une impédance modifiable par le contrôleur de sorte à influer sur l'onde secondaire émise, le récepteur réglable étant initialement dans un mode de détection où le récepteur réglable a une impédance de base (IB), le procédé comprenant :
- une étape de détection du récepteur dans laquelle le récepteur réglable est détecté par le contrôleur global lorsque l'antenne globale reçoit l'onde secondaire émise par le récepteur réglable, suivie d'
- une étape de reconfiguration dans laquelle le contrôleur global commande le contrôleur de récepteur de passer à un mode de coopération où l'impédance du récepteur réglable est alternée entre une première impédance de configuration (IC1) et une deuxième impédance de configuration (IC2) afin de détecter d'autres récepteurs, l'étape de reconfiguration étant d'une durée (T1) d'ordre de magnitude supérieur par rapport à une durée (T2, T3) de chaque alternance des première et deuxième impédances de configuration.

2. Procédé selon la revendication 1, dans lequel l'impédance de base est imposée par le contrôleur de récepteur indépendamment du contrôleur global.

3. Procédé selon la revendication 1 ou 2, dans lequel la première impédance de configuration est l'impédance de base.

4. Procédé selon l'une des revendications 1 à 3, dans lequel la première impédance de configuration est éloignée de la deuxième impédance de configuration.

5. Procédé selon l'une des revendications 1 à 3, dans lequel la première impédance de configuration et la deuxième impédance de configuration sont proches et de part et d'autre de l'impédance de base dans le plan complexe.

6. Procédé selon l'une des revendications précédentes, dans lequel le récepteur réglable est un premier récepteur réglable (30a), l'antenne de récepteur (32) est une antenne de premier récepteur, l'onde primaire est une première onde primaire, l'onde secondaire est une première onde secondaire, le contrôleur de récepteur (31) est un contrôleur de premier récepteur, le composant réglable (35) est un composant réglable de premier récepteur, l'impédance de base est une première impédance de base, l'impédance de configuration est une première impédance de configuration, et le système contient un deuxième récepteur réglable (30b), le deuxième récepteur réglable ayant une antenne de deuxième récepteur (32b) adaptée pour recevoir l'onde primaire et émettre une deuxième onde secondaire (OSb), un contrôleur de deuxième récepteur (31b) relié à l'antenne de deuxième récepteur, et un composant réglable de deuxième récepteur connecté au contrôleur de deuxième récepteur et à l'antenne de deuxième récepteur, le contrôleur (31b) de deuxième récepteur (30) étant adapté pour commander l'émission de la deuxième onde secondaire par l'antenne de deuxième récepteur et pour détecter l'onde primaire reçue par l'antenne de deuxième récepteur, le composant réglable de deuxième récepteur ayant une impédance modifiable par le contrôleur de deuxième récepteur de sorte à influer sur la deuxième onde secondaire émise par l'antenne de deuxième récepteur, le deuxième récepteur réglable étant initialement dans le mode de détection où le deuxième récepteur réglable a une deuxième impédance de base,
le procédé comprenant de plus une étape de reconfiguration du deuxième récepteur dans laquelle lorsque l'antenne globale reçoit la deuxième onde secondaire émise par le deuxième récepteur réglable et que le contrôleur détecte le deuxième récepteur réglable, le contrôleur global commande le deuxième récepteur réglable de passer en mode de coopération dans lequel l'impédance du deuxième récepteur réglable alterne entre une première impédance de configuration (IC2a) du deuxième récepteur et une deuxième impédance de configuration (IC2b) du deuxième récepteur afin de détecter d'autres récepteurs, l'étape de reconfiguration du deuxième récepteur réglable étant d'une durée (T1b) d'ordre de magnitude supérieur par rapport à la durée (T2b, T3b) de chaque alternance des première et deuxième impédances de configuration du deuxième récepteur.

7. Procédé selon la revendication 6, dans lequel la première impédance de configuration du deuxième récepteur est la deuxième impédance de base du deuxième récepteur.

8. Procédé selon la revendication 6 ou 7, dans lequel la première impédance de configuration du deuxième récepteur est éloignée de la deuxième impédance de configuration du deuxième récepteur.

9. Procédé selon l'une des revendications 6 ou 7, dans lequel la première impédance de configuration du deuxième récepteur et la deuxième impédance de configuration du deuxième récepteur sont proches et de part et d'autre de l'impédance de base dans le plan complexe.

10. Procédé selon l'une quelconque des revendications précédentes, dans lequel les alternances des impédances de configuration du deuxième récepteur dans le mode de coopération sont déterminées par un algorithme d'optimisation, ou par une série prédéfinie de valeurs d'impédances.

11. Procédé selon l'une quelconque des revendications précédentes, dans lequel les alternances des impédances de configuration du deuxième récepteur dans le mode de coopération sont effectuées à des instants temporels non périodiques irréguliers.

12. Procédé selon l'une quelconque des revendications précédentes, dans lequel le contrôleur global détermine les alternances des impédances de configuration du deuxième récepteur dans le mode de coopération.

13. Procédé selon l'une quelconque des revendications précédentes, dans lequel le contrôleur global commande le passage en mode de coopération des récepteurs identifiés, et les contrôleurs de ces récepteurs réglables identifiés déterminent les alternances des impédances de configuration lorsqu'ils sont en mode de coopération.

14. Procédé selon l'une quelconque des revendications précédentes, dans lequel dans le mode de coopération, l'impédance du récepteur réglable alterne entre une pluralité d'impédances de configuration.

15. Procédé selon l'une quelconque des revendications précédentes, dans lequel le récepteur réglable inclut une pluralité de composants réglables et d'antennes associées, et dans lequel :
- le contrôleur global commande l'émission par l'antenne globale d'une onde de contrôle globale contenant une information d'identification avec un paramètre de réglage associé pour désigner chaque composant réglable à qui est destiné ledit paramètre de réglage, et
- ledit composant réglable pilote l'impédance de l'antenne associée par rapport au paramètre de réglage si l'information d'identification est égale à son identifiant de composant réglable (IDcr).

16. Procédé selon l'une quelconque des revendications précédentes, dans lequel le système comprend de plus un élément réglable (20) relié à l'antenne globale, et dans l'étape de détection du récepteur le contrôleur global modifie de plus l'impédance d'élément réglable.

17. Procédé selon la revendication 16, dans lequel le contrôleur global modifie simultanément l'impédance de l'élément réglable et l'impédance du récepteur réglable identifié selon des valeurs déterminées par un algorithme d'optimisation.

18. **Système (10) de détection de récepteurs** comprenant :
- un récepteur réglable (30),
- une antenne globale (42) adaptée pour émettre une onde primaire (OP), et pour recevoir une onde secondaire (OS) émise par le récepteur réglable en réponse de la réception de l'onde primaire,
- un contrôleur global (41) relié à l'antenne globale, le contrôleur global étant adapté pour commander l'émission de l'onde primaire et pour détecter le récepteur réglable par l'intermédiaire de l'onde secondaire reçue par l'antenne globale,
le récepteur réglable comprenant:
- une antenne de récepteur(32) adaptée pour émettre l'onde secondaire ;
- un contrôleur de récepteur (31) relié à l'antenne de récepteur, le contrôleur de récepteur étant adapté à commander l'émission de l'onde secondaire par l'antenne de récepteur et à détecter l'onde primaire reçue par l'antenne de récepteur,
- un composant réglable (35) connecté au contrôleur (31) et à l'antenne (32),
le composant réglable, et donc le récepteur réglable, ayant une impédance modifiable par le contrôleur afin de modifier la manière dont l'onde primaire est réfléchie et/ou transmise par l'antenne de récepteur en onde secondaire,
**caractérisé en ce que** le système étant configuré tel que lorsque le récepteur réglable est détecté par le contrôleur global, le contrôleur global commande le contrôleur de récepteur de passer d'un mode de détection à un mode de coopération,
- dans le mode de détection, le récepteur réglable a une impédance de base (IB),
- dans le mode de coopération, l'impédance du récepteur réglable est alternée entre une première impédance de configuration (IC1) et une deuxième impédance de configuration (IC2) afin de détecter d'autres récepteurs, le mode de coopération étant d'une durée (T1) d'ordre de magnitude supérieur par rapport à une durée (T2, T3) de chaque alternance des première et deuxième impédances de configuration.

19. Système selon la revendication 18, dans lequel la première impédance de configuration est l'impédance de base.

20. Système selon la revendication 18 ou 19, dans lequel la première impédance de configuration est éloignée de la deuxième impédance de configuration.

21. Système selon l'une quelconque des revendications 18 à 20, dans lequel les alternances des impédances de configuration dans le mode de coopération sont déterminées par un algorithme d'optimisation, ou par une série prédéfinie de valeurs d'impédances.

22. Système selon l'une quelconque des revendications 18 à 21, dans lequel les alternances des impédances de configuration dans le mode de coopération sont effectuées à des instants temporels non périodiques irréguliers.

23. Système selon l'une quelconque des revendications 18 à 22, dans lequel le contrôleur global est adapté à commander les alternances des impédances de configuration dans le mode de coopération du récepteur réglable.

24. Système selon l'une quelconque des revendications 18 à 23, dans lequel le contrôleur global est adapté à commander le passage en mode de coopération des récepteurs réglables identifiés, et le contrôleur du récepteur réglable identifié est adapté à commander les alternances de l'impédance de configuration lorsqu'il est en mode de coopération.

25. **Récepteur réglable (30)** comprenant :
- une antenne (32) adaptée pour émettre une onde secondaire (OS) en réponse de la réception d'une onde primaire (OP) et pour recevoir une onde de contrôle globale différente de l'onde primaire. et
- un contrôleur (31) relié à l'antenne, le contrôleur étant adapté pour commander l'émission de l'onde secondaire et pour détecter l'onde primaire reçue et l'onde de contrôle globale,
- un composant réglable (35) connecté au contrôleur (31) et à l'antenne (32),
le composant réglable, et donc le récepteur réglable, ayant une impédance modifiable par le contrôleur de sorte à influer sur l'onde secondaire émise,
le récepteur réglable ayant un mode de détection et un mode de coopération, le récepteur réglable étant adapté de passer du mode de
détection au mode de coopération en fonction de l'onde de contrôle globale reçue,
- dans le mode de détection, le récepteur réglable a une impédance de base (IB), et
- dans le mode de coopération, l'impédance du récepteur réglable est adaptée à être alternée entre une première impédance de configuration (IC1) et une deuxième impédance de configuration (IC2) afin de détecter d'autres récepteurs, le mode de coopération étant d'une durée (T1) d'ordre de magnitude supérieur par rapport à une durée (T2, T3) de chaque alternance des première et deuxième impédances de configuration.

## Patentansprüche

1. **Verfahren zum Erfassen von Empfängern,** das von einem Erfassungssystem (10) durchgeführt wird, das eine Gesamtantenne (42) umfasst, die zum Senden einer Primärwelle (OP) ausgelegt ist, und eine mit der Gesamtantenne verbundene Gesamtsteuerung (41) umfasst, wobei das System einen einstellbaren Empfänger (30) mit einer Empfängerantenne (32) umfasst, die zum Empfangen der Primärwelle und zum Senden einer Sekundärwelle (OS) ausgelegt ist, wobei der einstellbare Empfänger eine mit der Empfängerantenne verbundene Empfängersteuerung (31) umfasst, wobei die Empfängersteuerung dazu ausgelegt ist, die von der Empfängerantenne empfangene Primärwelle zu erfassen und die Aussendung der Sekundärwelle durch die Empfängerantenne zu steuern, wobei der abstimmbare Empfänger eine einstellbare Komponente (35) aufweist, das mit der Steuerung (31) und der Antenne (32) verbunden ist, wobei die einstellbare Komponente (35) und damit der einstellbare Empfänger eine Impedanz aufweist, die von der Steuerung so verändert werden kann, dass sie die ausgesendete Sekundärwelle beeinflusst, wobei sich der einstellbare Empfänger anfänglich in einem Erfassungsmodus befindet, in dem der einstellbare Empfänger eine Basisimpedanz (IB) aufweist, wobei das Verfahren umfasst:
- einen Empfangserfassungsschritt, in dem der einstellbare Empfänger von der Gesamtsteuerung erfasst wird, wenn die Gesamtantenne die vom einstellbaren Empfänger ausgesendete Sekundärwelle empfängt, gefolgt von
- einem Rekonfigurationsschritt, in dem die Gesamtsteuerung die Empfängersteuerung anweist, in einen Kooperationsmodus überzugehen, in dem die Impedanz des einstellbaren Empfängers zwischen einer ersten Konfigurationsimpedanz (IC1) und einer zweiten Konfigurationsimpedanz (IC2) umgeschaltet wird, um weitere Empfänger zu detektieren, wobei der Schritt der Rekonfiguration eine Dauer (T1) hat, die um eine Größenordnung größer ist als eine Dauer (T2, T3) jedes Wechsels zwischen der ersten und der zweiten Konfigurationsimpedanz.

2. Verfahren nach Anspruch 1, wobei die Basisimpedanz von der Empfängersteuerung unabhängig von der Gesamtsteuerung vorgegeben wird.

3. Verfahren nach Anspruch 1 oder 2, wobei die erste Konfigurationsimpedanz die Basisimpedanz ist.

4. Verfahren nach einem der Ansprüche 1 bis 3, wobei die erste Konfigurationsimpedanz von der zweiten Konfigurationsimpedanz entfernt ist.

5. Verfahren nach einem der Ansprüche 1 bis 3, wobei die erste Konfigurationsimpedanz und die zweite Konfigurationsimpedanz nahe beieinander und auf beiden Seiten der Basisimpedanz in der komplexen Ebene liegen.

6. Verfahren nach einem der vorhergehenden Ansprüche, wobei der einstellbare Empfänger ein erster einstellbarer Empfänger (30a) ist, die Empfängerantenne (32) eine erste Empfängerantenne ist, die Primärwelle eine erste Primärwelle ist, die Sekundärwelle eine erste Sekundärwelle ist, die Empfängersteuerung (31) eine Steuerung für den ersten Empfänger ist, die einstellbare Komponente (35) eine einstellbare Komponente für den ersten Empfänger ist, die Basisimpedanz eine erste Basisimpedanz ist, die Konfigurationsimpedanz eine erste Konfigurationsimpedanz ist und das System einen zweiten einstellbaren Empfänger (30b) enthält, wobei der zweite einstellbare Empfänger eine zweite Empfängerantenne (32b) aufweist, die zum Empfangen der Primärwelle und zum Senden einer zweiten Sekundärwelle (OSb) ausgelegt ist, eine zweite Empfängersteuerung (31b), die mit der zweiten Empfängerantenne verbunden ist, und eine zweite Empfänger-Einstellkomponente, die mit der zweiten Empfänger-Steuereinheit und der zweiten Empfängerantenne verbunden ist, wobei die zweite Steuerung (31b) des zweiten Empfängers (30) dazu ausgelegt ist, die Aussendung der zweiten Sekundärwelle durch die zweite Empfängerantenne zu steuern und die von der zweiten Empfängerantenne empfangene Primärwelle zu erfassen, wobei die einstellbare zweite Empfängerkomponente eine Impedanz aufweist, die durch die zweite Empfängersteuerung so veränderbar ist, dass sie die von der zweiten Empfängerantenne ausgesendete zweite Sekundärwelle beeinflusst, wobei der einstellbare zweite Empfänger anfänglich in einem Erfassungsmodus ist, in dem der einstellbare zweite Empfänger eine zweite Basisimpedanz aufweist, wobei das Verfahren ferner einen Schritt zum Rekonfigurieren des zweiten Empfängers umfasst, bei dem, wenn die Gesamtantenne die von dem einstellbaren zweiten Empfänger ausgesendete zweite Sekundärwelle empfängt und die Steuereinheit den einstellbaren zweiten Empfänger erkennt, die Gesamtsteuerung den zweiten einstellbaren Empfänger in einen Kooperationsmodus versetzt, in dem die Impedanz des zweiten einstellbaren Empfängers zwischen einer ersten Konfigurationsimpedanz (IC2a) des zweiten Empfängers und einer zweiten Konfigurationsimpedanz (IC2b) des zweiten Empfängers wechselt, um andere Empfänger zu erkennen, wobei der Schritt der Rekonfiguration des zweiten einstellbaren Empfängers eine Dauer (T1b) aufweist, die um eine Größenordnung größer ist als die Dauer (T2b, T3b) jedes Wechsels zwischen der ersten und der zweiten Konfigurationsimpedanz des zweiten Empfängers.

7. Verfahren nach Anspruch 6, wobei die erste Konfigurationsimpedanz des zweiten Empfängers die zweite Basisimpedanz des zweiten Empfängers ist.

8. Verfahren nach Anspruch 6 oder 7, wobei die erste Konfigurationsimpedanz des zweiten Empfängers von der zweiten Konfigurationsimpedanz des zweiten Empfängers entfernt ist.

9. Verfahren nach einem der Ansprüche 6 oder 7, wobei die erste Konfigurationsimpedanz des zweiten Empfängers und die zweite Konfigurationsimpedanz des zweiten Empfängers nahe beieinander und auf beiden Seiten der Basisimpedanz in der komplexen Ebene liegen.

10. Verfahren nach einem der vorhergehenden Ansprüche, wobei die Wechsel der Konfigurationsimpedanzen des zweiten Empfängers im Kooperationsmodus durch einen Optimierungsalgorithmus oder durch eine vordefinierte Reihe von Impedanzwerten bestimmt werden.

11. Verfahren nach einem der vorhergehenden Ansprüche, wobei die Wechsel der Konfigurationsimpedanzen des zweiten Empfängers im Kooperationsmodus zu unregelmäßigen, nicht periodischen Zeitpunkten erfolgen.

12. Verfahren nach einem der vorhergehenden Ansprüche, wobei die Gesamtsteuerung die Wechsel der Konfigurationsimpedanzen des zweiten Empfängers im Kooperationsmodus bestimmt.

13. Verfahren nach einem der vorhergehenden Ansprüche, wobei die Gesamtsteuerung den Übergang der identifizierten Empfänger in den Kooperationsmodus steuert und die Steuerungen dieser identifizierten einstellbaren Empfänger die Wechsel der Konfigurationsimpedanzen bestimmen, wenn sie sich im Kooperationsmodus befinden.

14. Verfahren nach einem der vorhergehenden Ansprüche, wobei im Kooperationsmodus die Impedanz des einstellbaren Empfängers zwischen einer Mehrzahl von Konfigurationsimpedanzen wechselt.

15. Verfahren nach einem der vorhergehenden Ansprüche, wobei der einstellbare Empfänger eine Mehrzahl von einstellbaren Komponenten und zugehörigen Antennen umfasst und wobei:
- die Gesamtsteuerung die Übertragung einer Gesamtsteuerungswelle durch die Gesamtantenne steuert, die Identifikationsinformationen mit einem zugehörigen Einstellparameter enthält, um jede einstellbare Komponente zu bezeichnen, für die der Einstellparameter bestimmt ist, und
- die einstellbare Komponente die Impedanz der zugehörigen Antenne in Abhängigkeit von dem Einstellparameter steuert, wenn die Identifizierungsinformation gleich ihrer einstellbaren Komponenten-ID (IDcr) ist.

16. Verfahren nach einem der vorhergehenden Ansprüche, wobei das System ferner ein mit der Gesamtantenne verbundenes einstellbares Element (20) umfasst und in dem Empfänger-Erfassungsschritt die Gesamtsteuerung zusätzlich die Impedanz des einstellbaren Elements ändert.

17. Verfahren nach Anspruch 16, wobei die Gesamtsteuerung gleichzeitig die Impedanz des einstellbaren Elements und die Impedanz des identifizierten einstellbaren Empfängers gemäß Werten ändert, die durch einen Optimierungsalgorithmus bestimmt werden.

18. **System (10) zur Empfängererkennung,** umfassend
- einen einstellbaren Empfänger (30),
- eine Gesamtantenne (42), die dazu ausgelegt ist, eine Primärwelle (OP) zu senden und eine Sekundärwelle (OS) zu empfangen, die von dem einstellbaren Empfänger als Reaktion auf den Empfang der Primärwelle gesendet wird,
- eine mit der Gesamtantenne verbundene Gesamtsteuerung (41), wobei die Gesamtsteuerung dazu ausgelegt ist, die Aussendung der Primärwelle zu steuern und den einstellbaren Empfänger über die von der Gesamtantenne empfangene Sekundärwelle zu erfassen, wobei der einstellbare Empfänger umfasst: eine Empfängerantenne (32), die dazu ausgelegt ist, die Sekundärwelle zu senden,
- eine mit der Empfängerantenne verbundene Empfängersteuerung (31), wobei die Empfängersteuerung dazu ausgelegt ist, die Aussendung der Sekundärwelle durch die Empfängerantenne zu steuern und die von der Empfängerantenne empfangene Primärwelle zu erkennen,
- eine einstellbare Komponente (35), die mit der Steuerung (31) und der Antenne (32) verbunden ist,
wobei die einstellbare Komponente und damit der einstellbare Empfänger eine von der Steuerung veränderbare Impedanz aufweist, um die Art und Weise zu verändern, in der die Primärwelle von der Empfangsantenne als Sekundärwelle reflektiert und/oder übertragen wird, **dadurch gekennzeichnet, dass** das System so konfiguriert ist, dass, wenn der einstellbare Empfänger von der Gesamtsteuerung erkannt wird, die Gesamtsteuerung die Empfängersteuerung anweist, von einem Erkennungsmodus in einen Kooperationsmodus überzugehen,
- im Erkennungsmodus weist der einstellbare Empfänger eine Basisimpedanz (IB) auf,
- im Kooperationsmodus wird die Impedanz des einstellbaren Empfängers zwischen einer ersten Konfigurationsimpedanz (IC1) und einer zweiten Konfigurationsimpedanz (IC2) umgeschaltet, um andere Empfänger zu erkennen, wobei der Kooperationsmodus eine Dauer (T1) hat, die um eine Größenordnung größer ist als eine Dauer (T2, T3) jedes Umschaltens zwischen der ersten und der zweiten Konfigurationsimpedanz.

19. System nach Anspruch 18, wobei die erste Konfigurationsimpedanz die Basisimpedanz ist.

20. System nach Anspruch 18 oder 19, wobei die erste Konfigurationsimpedanz von der zweiten Konfigurationsimpedanz entfernt ist.

21. System nach einem der Ansprüche 18 bis 20, wobei die Wechsel der Konfigurationsimpedanzen im Kooperationsmodus durch einen Optimierungsalgorithmus oder durch eine vordefinierte Reihe von Impedanzwerten bestimmt werden.

22. System nach einem der Ansprüche 18 bis 21, wobei die Wechsel der Konfigurationsimpedanzen im Kooperationsmodus zu unregelmäßigen, nicht periodischen Zeitpunkten erfolgen.

23. System nach einem der Ansprüche 18 bis 22, wobei die Gesamtsteuerung dazu ausgelegt ist, die Wechsel der Konfigurationsimpedanzen im Kooperationsmodus des einstellbaren Empfängers zu steuern.

24. System nach einem der Ansprüche 18 bis 23, wobei die Gesamtsteuerung dazu ausgelegt ist, den Übergang der identifizierten einstellbaren Empfänger in den Kooperationsmodus zu steuern, und wobei die identifizierte Steuerung dazu ausgelegt ist, die Konfigurationsimpedanzwechsel des einstellbaren Empfängers zu steuern, wenn dieser sich im Kooperationsmodus befindet.

25. **Einstellbarer Empfänger (30),** umfassend:
- eine Antenne (32), die dazu ausgelegt ist, als Reaktion auf den Empfang einer Primärwelle (OP) eine Sekundärwelle (OS) zu senden und eine von der Primärwelle verschiedene Gesamtsteuerwelle zu empfangen, und
- eine mit der Antenne verbundene Steuerung (31), die dazu ausgelegt ist, die Aussendung der Sekundärwelle zu steuern und die empfangene Primärwelle und die Gesamtsteuerwelle zu erfassen,
- eine mit der Steuerung (31) und der Antenne (32) verbundene einstellbare Komponente (35), wobei die einstellbare Komponente und damit der einstellbare Empfänger eine von der Steuereinheit veränderbare Impedanz aufweist, um die ausgesendete Sekundärwelle zu beeinflussen, wobei der einstellbare Empfänger einen Detektionsmodus und einen Kooperationsmodus aufweist, wobei der einstellbare Empfänger dazu ausgelegt ist, in Abhängigkeit von der empfangenen Gesamtsteuerwelle vom Detektionsmodus in den Kooperationsmodus überzugehen,
- im Detektionsmodus weist der einstellbare Empfänger eine Basisimpedanz (IB) auf, und
- im Kooperationsmodus ist die Impedanz des einstellbaren Empfängers so ausgelegt, dass sie zwischen einer ersten Konfigurationsimpedanz (IC1) und einer zweiten Konfigurationsimpedanz (IC2) umgeschaltet werden kann, um andere Empfänger zu detektieren, wobei der Kooperationsmodus eine Dauer (T1) hat, die um eine Größenordnung größer ist als eine Dauer (T2, T3) jedes Wechsels zwischen der ersten und der zweiten Konfigurationsimpedanz.

## Claims

1. **Method for detecting receivers,** implemented by a detection system (10) comprising a general antenna (42) suitable for emitting a primary wave (OP), and a general controller (41) connected to the general antenna, the system comprising an adjustable receiver (30) having a receiver antenna (32) suitable for receiving the primary wave and for emitting a secondary wave (OS), the adjustable receiver having a receiver controller (31) connected to the receiver antenna, the receiver controller being suitable for detecting the primary wave received by the receiver antenna and for commanding the emission of the secondary wave by the receiver antenna, the adjustable receiver having an adjustable component (35) connected to the controller (31)and to the antenna (32), the adjustable component (35) and the adjustable receiver, having an impedance modifiable by the controller so as to influence the secondary wave emitted, the adjustable receiver initially being in a detection mode where the adjustable receiver has a base impedance (IB), the method comprising:
- a receiver detection step in which the adjustable receiver is detected by the general controller when the general antenna receives the secondary wave emitted by the adjustable receiver, followed by
- a reconfiguration step in which the general controller commands the receiver controller to switch to an interaction mode where the impedance of the adjustable receiver is alternated between a first configuration impedance (IC1) and a second configuration impedance (IC2) in order to detect other receivers, the reconfiguration step being of a duration (T1) that is an order of magnitude higher than the duration (T2, T3) of each alternation of the first and second configuration impedances.

2. Method according to claim 1, wherein the base impedance is imposed by the receiver controller independently of the general controller.

3. Method according to claim 1 or 2, wherein the first configuration impedance is the base impedance.

4. Method according to one of claims 1 to 3, wherein the first configuration impedance is at a distance from the second configuration impedance.

5. Method according to one of claims 1 to 3, wherein the first configuration impedance and the second configuration impedance are close to and with one on either side of the base impedance within the complex plane.

6. Method according to one of the preceding claims, wherein the adjustable receiver is a first adjustable receiver (30a), the receiver antenna (32) is a first receiver antenna, the primary wave is a first primary wave, the secondary wave is a first secondary wave, the receiver controller (31) is a first receiver controller, the adjustable component (35) being a component adjustable by the first receiver, the base impedance is a first base impedance, the configuration impedance is a first configuration impedance, and the system contains a second adjustable receiver (30b), the second adjustable receiver having a second receiver antenna (32b) suitable for receiving the primary wave and emitting a second secondary wave (OSb), a second receiver controller (31b) connected to the second receiver antenna, and an adjustable component of the second receiver connected to the second receiver controller and to the second receiver antenna, the second receiver (30) controller (31b) being suitable for controlling the emission of the second secondary wave by the second receiver antenna and for detecting the primary wave received by the second receiver antenna, the adjustable component of the second adjustable receiver having an impedance modifiable by the second receiver controller so as to influence the second secondary wave emitted by the second receiver antenna, the second adjustable receiver initially being in detection mode where the second adjustable receiver has a second base impedance,
the method further comprising a reconfiguration step of reconfiguring the second receiver in which, when the general antenna receives the second secondary wave emitted by the second adjustable receiver and the controller detects the second adjustable receiver, the general controller commands the second adjustable receiver to switch to interaction mode where the impedance of the second adjustable receiver alternates between a first configuration impedance (IC2a) of the second receiver and a second configuration impedance (IC2b) of the second receiver in order to detect other receivers, the reconfiguration step of reconfiguring the second adjustable receiver being of a duration (T1b) that is an order of magnitude higher than the duration (T2b, T3b) of each alternation of the first and second configuration impedances of the second receiver.

7. Method according to claim 6, wherein the first configuration impedance of the second receiver is the second base impedance of the second receiver.

8. Method according to claim 6 or 7, wherein the first configuration impedance of the second receiver is at a distance from the second configuration impedance of the second receiver.

9. Method according to one of claims 6 or 7, wherein the first configuration impedance of the second receiver and the second configuration impedance of the second receiver are close to and with one on either side of the base impedance within the complex plane.

10. Method according to any one of the preceding claims, wherein the alternations of the configuration impedances of the second receiver in interaction mode are determined by an optimization algorithm, or by a predefined series of impedance values.

11. Method according to any one of the preceding claims, wherein the alternations of the configuration impedances of the second receiver in interaction mode are carried out at irregular non-periodic time instants.

12. Method according to any one of the preceding claims, wherein the general controller determines the alternations of the configuration impedances of the second receiver in interaction mode.

13. Method according to any one of the preceding claims, wherein the general controller commands the switch to interaction mode of the identified receivers, and the controllers of these identified adjustable receivers determine the alternations of the configuration impedances when they are in interaction mode.

14. Method according to any one of the preceding claims, wherein, in interaction mode, the impedance of the adjustable receiver alternates between a plurality of configuration impedances.

15. Method according to any one of the preceding claims, wherein the adjustable receiver includes a plurality of adjustable components and associated antennas, and wherein:
- the general controller commands the emission by the general antenna of a general control wave containing identification information along with an associated adjustment parameter to designate each adjustable component for which said adjustment parameter is intended, and
- said adjustable component controls the impedance of the associated antenna in relation to the adjustment parameter if the identification information is equal to its adjustable component identifier (IDcr).

16. Method according to any one of the preceding claims, wherein the system further comprises an adjustable element (20) connected to the general antenna, and in the receiver detection step the general controller also modifies the impedance of the adjustable element.

17. Method according to claim 16, wherein the general controller simultaneously modifies the impedance of the adjustable element and the impedance of the identified adjustable receiver, according to values determined by an optimization algorithm.

18. **Receiver detection system (10)** comprising:
- an adjustable receiver (30),
- a general antenna (42) suitable for emitting a primary wave (OP), and for receiving a secondary wave (OS) emitted by the adjustable receiver in response to reception of the primary wave,
- a general controller (41) connected to the general antenna, the general controller being suitable for commanding the emission of the primary wave and for detecting the adjustable receiver by means of the secondary wave received by the general antenna,
the adjustable receiver further comprising:
- a receiver antenna (32) suitable for emitting the secondary wave;
- a receiver controller (31) connected to the receiver antenna, the receiver controller being suitable for commanding the emission of the secondary wave by the receiver antenna and for detecting the primary wave received by the receiver antenna,
- an adjustable component (35) connected to the controller (31) and to the antenna (32),
the adjustable component, and thus the adjustable receiver, having an impedance modifiable by the controller in order to modify the manner in which the primary wave is reflected and/or transmitted by the receiver antenna as a secondary wave,
**characterized in that** the system being configured such that, when the adjustable receiver is detected by the general controller, the general controller commands the receiver controller to switch from a detection mode to an interaction mode,
- in detection mode, the adjustable receiver has a base impedance (IB),
- in interaction mode, the impedance of the adjustable receiver is alternated between a first configuration impedance (IC1) and a second configuration impedance (IC2) in order to detect other receivers, the interaction mode being of a duration (T1) that is an order of magnitude higher than the duration (T2, T3) of each alternation of the first and second configuration impedances.

19. System according to claim 18, wherein the first configuration impedance is the base impedance.

20. System according to claim 18 or 19, wherein the first configuration impedance is at a distance from the second configuration impedance.

21. System according to any one of claims 18 to 20, wherein the alternations of the configuration impedances in interaction mode are determined by an optimization algorithm or by a predefined series of impedance values.

22. System according to any one of claims 18 to 21, wherein the alternations of the configuration impedances in interaction mode are carried out at irregular non-periodic time instants.

23. System according to any one of claims 18 to 22, wherein the general controller is suitable for commanding the alternations of the configuration impedances in interaction mode of the adjustable receiver.

24. System according to any one of claims 18 to 23, wherein the general controller is suitable for commanding the switch to interaction mode of the identified adjustable receivers, and the controller of the identified adjustable receiver is suitable for commanding the alternations of the configuration impedance when it is in interaction mode.

25. **Adjustable receiver (30)** comprising:
- an antenna (32) suitable for emitting a secondary wave (OS) in response to receiving a primary wave (OP) and for receiving a general control wave different from the primary wave; and
- a controller (31) connected to the antenna, the controller being suitable for commanding the emission of the secondary wave and for detecting the primary wave received and the general control wave,
- an adjustable component (35) connected to the controller (31) and to the antenna (32),
the adjustable component having a impedance modifiable by the controller so as to influence the secondary wave emitted, the adjustable component, and thus adjustable receiver having a detection mode and an interaction mode, the adjustable receiver being adapted to switch from detection mode to interaction mode according to the general control wave received,
- in detection mode, the adjustable receiver has a base impedance (IB), and
- in interaction mode, the impedance of the adjustable receiver is adapted to alternate between a first configuration impedance (IC1) and a second configuration impedance (IC2) in order to detect other receivers, the interaction mode being of a duration (T1) that is an order of magnitude higher than the duration (T2, T3) of each alternation of the first and second configuration impedances.
